# EUROPEAN PATENT APPLICATION

(11) **EP 1 920 900 A1**
(43) Date of publication of application: **14.05.2008**
(21) Application number: 06782802.0
(22) Date of filing: 17.08.2006
(51) Int. Cl.: B29C 45/17, B29C 45/14, H01R 43/18, B29L 31/36

(54) **INSERT MOLDING MACHINE WITH AUTOMATIC HOOP FEEDING SYSTEM**

(30) Priority: 22.08.2005 JP 2005239490
(71) Applicant: Meioh Plastics Molding Co., Ltd, Ohta-ku Tokyo 146-0081 (JP)
(72) Inventor: SAKAI, Keisuke, Tokyo 146-0081 (JP)
(74) Representative: Cheyne, John Robert Alexander M.
(86) International application number: PCT/JP2006/316189
(87) International publication number: WO 2007/023732

(57) **Abstract**

An insert molding machine for manufacturing electronic parts, is equipped with an automatic hoop feeder system for intermittently feeding the metal components of a molded product by way of a hoop formed of a thin carrier strip on which a plurality of metal components are carried at regular intervals in a row. A pair of hoop conveying means are installed adjacently to one of the opposed inlet and outlet sides of the mold of an injection molding machine, and a pair of carriages supported by the respective hoop conveying means are interconnected mechanically to each other through a coupling connector so that the both carriages are moved forward and backward in complete synchronism with each other when one of the carriages is driven to slide.

## Description

### FIELD OF THE INVENTION

The present invention relates to an insert molding machine for manufacturing electronic parts such as molded connector terminal devices for surface mounting. In particular, the invention relates to an insert molding machine with an automatic hoop feeder system for intermittently feeding the metal components of a product to be manufactured, in the form of a hoop having a thin carrier strip on which a plurality of metal components are carried in advance.

### BACKGROUND ART

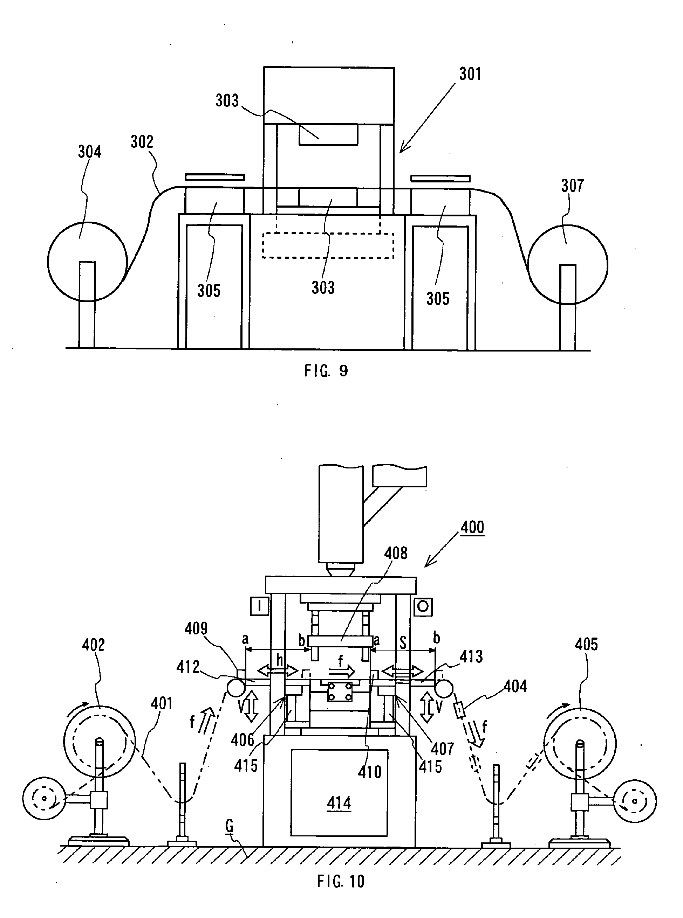

FIG. 9 is an explanatory front view schematically showing the structure of a conventional insert molding machine with a hoop feeder. As shown in the figure, the molding machine 301 has a pair of die halves 303, between which is fed with a hoop 302 unwound from an unwinding reel 304. A conveyor 305 is positioned outside one side of the molding machine 301. The electronic terminals carried on the unwound hoop 302 are conveyed by the conveyor 305 into the space between the pair of die halves 303 intermittently in synchronism with the molding cycles and molded with injected molding resin in the mold cavity formed by the die halves (insert molding).

Another conveyor 306 is positioned outside the other side of the molding machine 301. After insert molding, this conveyor 306 conveys the hoop 302, which carries the molded products thereon, in synchronism from the pair of die halves 303. The conveyed hoop 302 is wound on a winding reel 307. Such a conventional molding machine has problems as follows.

Because the pair of conveyors 305, 306 are positioned outside both sides of the molding machine 301, the hoop 302 is conveyed for a long span distance. This makes it difficult to set a block of electronic terminals carried on the hoop 302 accurately in a predetermined position between the pair of die halves 303. The conveyor 306 on the outlet side pulls the hoop 302, and the conveyor 305 on the inlet side is pulled by the hoop and follows the conveyor 306 on the outlet side. As a result, the hoop 302 is affected with an excessive tensile stress, and then if the conveyor 306 on the outlet side pulls the hoop 302 under a load higher than the load that can be born by the hoop, breakage of the hoop 302 or another trouble may occur. This makes impossible to increase the speed at which the hoop 302 is conveyed.

Further, because the distance between the conveyors 305 and 306 is long, it takes time to align the position of the hoop 302 accurately between the pair of die halves 303. Specifically, the conveyors 305, 306 for the hoop 302 move vertically in synchronism with the vertical motion of the molding die halves 303. Accordingly, every time the die halves 303 are replaced, it is necessary to adjust the conveying and lifting lengths on each of the conveyors 305, 306 at the inlet and outlet sides, the clamping mechanism timing, the hoop feed timing, etc.

An insert molding machine in which a hoop feeder system is incorporated into a mold has been proposed (Patent Document 1). FIG. 10 is a schematic front view typically showing a conventional insert molding machine with a hoop feeder system incorporated into a mold. As shown in the figure, a hoop 401, in the form of a thin carrier strip on which a plural blocks of electronic metal terminals are carried at regular intervals in a row, is unwound from an unwinding reel 402.
The hoop 401 is wound on the unwinding reel 402 in stock. The hoop 401 is conveyed (in direction f) from the unwinding reel 402 intermittently in synchronism with the molding cycles of an injection molding machine 414. The hoop 401 is fed into the mold cavity of the injection molding machine 414 and molded with the molding resin injected into the cavity. The molded products are, for example, molded electronic assemblies such as molded connector terminal devices 404 (shown schematically), each of which has a number of exposed connector contacts and other metallic portions molded within the insulating plastic mold. The connector terminal devices 404 are molded successively by the injection molding machine 414 and conveyed sequentially with the hoop 401 which is wound by a winding reel 405.

The insert molding machine 400 is installed on a horizontal plane G and equipped with conveyors 406, 407 for conveying the hoop 401 forward and intermittently. The conveyors 406, 407 are integral with the lower die half of the mold 408 and positioned on its inlet side (I) and outlet side (O) respectively. The conveyors 406, 407 comprise carriages 412, 413 respectively and clamping mechanisms 409, 410 respectively. The carriages 412, 413 reciprocate horizontally in synchronism. The clamping mechanisms 409, 410 clamp the hoop 401 on which a plural blocks of electronic metal terminals to be molded are carried at regular intervals. The conveyors 406, 407 also comprise a pair of mechanisms for reciprocating in synchronism horizontally in directions (h) for the stroke (S) from a clamping position (a) to an opening position (b) to convey the hoop 401 forward and intermittently. The conveyors 406, 407 further comprise mechanisms for moving the hoop 401 vertically (directions V) in synchronism by means of cylinders 415, which supports respectively the carriages 412, 413. The mechanisms for vertical movement by means of the cylinders 415 can be driven in synchronism to insert a block of the metal terminals carried on the hoop 401 in a preset position in the cavity of the mold 408, and to vertically move the molded terminal bases 404 carried on the hoop.

Patent Document 1: JP-A-2005-081587

In the conventional insert molding machine 400 as shown in FIG. 10, the conveyors 406, 407 are integral with the lower part of the mold 408, so that the span distance between the conveyors 406, 407 becomes shorter than that in case shown in Fig. 9. This enables the outlet conveyor 407 to pull the hoop 401 with weaker force than in the insert molding machine shown in FIG. 9. This also enables the positioning of the blocks of the metal terminals carried on the hoop 401 to be adjusted in relation to the mold 408 without difficulty. Further, when the mold 408 is being replaced, it is not difficult to adjust the positions where the conveyors 406, 407 are fitted, the moving stroke (S), the intervals at which the clamping mechanisms 409, 410 for clamping the block of the metal terminals carried on the hoop 401 in position are positioned, etc.

However, due to the conveyors 406, 407 being integral with the mold 408, the mold itself is high in price. The outlet conveyor 407 conveys the hoop 401 by pulling it, as is the case with the insert molding machine shown in FIG. 9. This makes it impossible to apply to the hoop 401 a load that cannot be born by the hoop itself, so that the conveying speed cannot be increased drastically.

In the technique for manufacturing metal-plastic composite parts or products by means of an insert molding machine, it is obvious that the productivity is improved if it takes short time to mold the parts or products each time. In this technique, improved accuracy in positioning in the mold the block of the metal terminals arrayed on the hoop results in not only an improved yield but also the manufacture of reliable products.

Also, in the technique for manufacturing metal-plastic composit parts or products by means of an insert molding machine, one of the high-speed molding conditions is to improve the accuracy in feeding the metal components arrayed on the hoop. The feeding accuracy may be lowered by the following causes:
1. Due to hoop:
   (a) Meanderings of the hoop and curves in the hoop (which are created by rolling and pressing strains on the hoop).
   (b) The difference made in dimension between the pilot hole and the conveyor feed pin when the metal components arrayed on the hoop are pressed.
2. Due to conveyors:
   (a) The relative positions of the conveyors, which are positioned in front of and in back of the mold.
   (b) Time lags between horizontal movements of the front and rear conveyors.
   (c) The absolute accuracy in the conveying length of the conveyors.

The cause 1 (b) can be removed by increasing the accuracy in machining the feed pin. The machining accuracy on the micrometer level is not particularly difficult in the current machining technique. With regard to the cause 2 (c), accuracy on the micrometer level can be attained simply by means of a direct drive servomotor technique or the like. With regard to the cause 1 (a), the problem to be solved is to clamp the hoop and fit it in the mold, with moderate tension applied to it. With regard to the cause 2 (a), the problem to be solved is to minimize the distance (span) between the conveyors, which are positioned on both sides of the mold. With regard to the cause 2 (b), the problem to be solved is to make the horizontal movement timing of each of the conveyors coincident with that of the other.

### SUMMARY OF THE INVENTION

The object of the present invention is therefore to provide an insert molding machine fitted with an automatic hoop feeder that enables high-speed molding by increasing the speed at which the metal components carried on a hoop are conveyed, without reducing the feeding accuracy with respect to the metal components arrayed on the hoop. Another object of the invention is to provide an insert molding machine fitted with an automatic hoop feeder in which the mold and the unit for conveying the hoop can be replaced simply and easily.

In accordance with the present invention the specified objects are attained by an insert molding machine comprising an injection molding machine, an automatic hoop feeder for conveying a hoop intermittently through a mold mounted on the injection molding machine, said hoop being formed of a thin carrier strip on which a plurality of metal components of a molded product to be manufactured are carried at regular intervals in a row, each of said metal components being inserted into a cavity of said mold and integrally molded with a molding resin injected in said cavity to form the molded product, and a pair of hoop conveying means each of which is installed adjacently to one of the opposed inlet and outlet sides of said mold respectively, wherein each of said hoop conveying means includes one of a pair of carriages each positioned on one of the opposed inlet and outlet sides of said mold respectively, hoop clamping means mounted on each of the carriages, carriage lifting means for moving each of the carriages vertically to a plurality of preset height positions in synchronism with each other, and carriage moving means for moving the carriages in synchronism forward and backward in hoop conveying directions, and wherein each of said carriage moving means includes one of a pair of supporting tables each mounted on one of the opposed inlet and outlet sides of said mold for supporting one of the carriages on the inlet and outlet sides respectively in slidable fashion forward and backward in the conveying directions, drive means mounted on one of the supporting tables for sliding the associated one of the carriages forward and backward, and a coupling connector for mechanically connecting the carriages with each other.

In a preferred embodiment of the insert molding machine according to the present invention, the coupling connector comprises a pair of connectors each arranged along one of both side walls of the mold and extending in the hoop conveying directions.

In another preferred embodiment of the insert molding machine according to the present invention, each of the connectors has a cranked shape.

In still another preferred embodiment of the insert molding machine according to the present invention, the drive means comprises a linear servomotor.

In still another preferred embodiment of the insert molding machine according to the present invention, the carriage lifting means comprises a pair of lifting tables each positioned just under one of the supporting tables respectively; and a plurality of lifting poles respectively connecting one of the lifting tables with the associated one of the supporting tables.

In still another preferred embodiment of the insert molding machine according to the present invention, each of the lifting tables is connected with the associated one of the supporting tables by at least three lifting poles.

In still another preferred embodiment of the insert molding machine according to the present invention, the lifting poles extend through holes formed through a die plate which supports a lower die half of the mold.

In still another preferred embodiment of the insert molding machine according to the present invention, the injection molding machine comprises a mechanism for opening and closing the mold by means of an electric motor drive.

According to the present invention, due to the fact that each of the hoop conveying means is installed adjacent to one of the opposite inlet and outlet sides of the mold, a hoop can be conveyed as it is clamped at two positions apart from each other over a sufficiently short span. This makes it possible to attain stable and high conveying accuracy, without curving and meandering the hoop. By connecting the carriages on the inlet and outlet sides by the coupling connector, it is possible to slide the carriages forward and backward in complete synchronism. This makes it possible to attain stable and high conveying accuracy, without applying a pull or other excessive tension to the hoop clamped to the carriages. This enables high-speed molding.

In case the lifting poles are arranged to extend through the die plate, it is possible to reduce the distance between the carriages installed on the inlet and outlet sides of said mold. It is preferable that at least three lifting poles, which extend through the die plate, are positioned at regular intervals at the apexes of a triangle. This stabilizes the supporting tables, making it possible to move them vertically with accuracy within a narrow space.

### BRIEF DESCRIPTION OF THE DRAWINGS

Fig. 1 shows a schematic front view of the whole configuration of an insert molding machine with an automatic hoop feeder in an embodiment according to the present invention.
Fig. 2 shows a perspective view of the carriages connected by a pair of coupling connectors of hoop conveying means in the present embodiment.
Fig. 3 shows a left side view of a principal portion of the molding machine in the present embodiment.
Fig. 4 shows a right side view of the principal portion of the molding machine in the present embodiment.
Fig. 5 shows a simplified plane view of the insert molding machine in the present embodiment.
Fig. 6 shows a plane view of a stationary die plate of the molding machine.
Fig. 7 shows schematically a front view of a portion including the stationary die plate shown in Fig. 6.
Figs. 8a to 8d show explanatorily a series of operational steps performed by the hoop conveying means in the present embodiment.
FIG. 9 shows a schematic front view of a conventional insert molding machine having a hoop feeder.
FIG. 10 shows a schematic front view of another conventional insert molding machine with a hoop feeder system incorporated into a mold.

In the Figures, the references denote as follows:
- 1:: insert molding machine
- 2:: hoop
- 3:: injection molding machine
- 4:: unwinding reel
- 5:: mold (die halves)
- 6:: clamping mechanism
- 7:: conveyor (hoop conveying means)
- 8:: carriage
- 9:: molded connector terminal device
- 10:: coupling connector
- 11:: linear servomotor
- 12:: clamping platen
- 15:: supporting table
- 16:: lifting pole
- 17a:: lifting device
- 17b:: servomotor
- 18:: lifting table
- 19:: stationary die plate
- 20:: hole

### DETAILED DESCRIPTION OF THE INVENTION

As already mentioned above, an insert molding machine according to the present invention comprises a pair of hoop conveying means, each of which is installed adjacently to one of the opposed inlet and outlet sides of the mold of an injection molding machine, so that a hoop can be conveyed as it is clamped at two positions apart from each other over a sufficiently short span in between. This makes it possible to attain stable and high conveying accuracy, without curving and meandering the hoop. Further, The pair of hoop conveying means include an inlet carriage and an outlet carriage respectively, which are connected by a coupling connector so that the both carriages move forward and backward in complete synchronism with each other. This makes it possible to attain stable and high conveying accuracy, without applying a pull or other excessive tension to the hoop clamped to the carriages. Consequently, it is possible to feed the hoop to the mold and discharge the hoop therefrom at high speed, thereby enabling high-speed molding.

It is essential that each of the hoop conveying means be adjacent to one of the opposed inlet and outlet sides of the mold of the injection molding machine. It is also essential that the conveyors of the hoop conveying means should clamp the hoop at least at two clamping positions on the inlet and outlet sides, retain the clamped hoop at a height where it is out of contact with the die halves of the mold not closed yet, convey the retained hoop for a predetermined distance from the inlet side to the outlet side, and bring down the conveyed hoop so that the metal components carried on the hoop for insert molding can be set in a preset position on the lower die half of the mold open. While the die halves are closed to clamp the mold, the carriages release the hoop from clamp, move down for themselves to the respective initial positions, where they are out of contact with the hoop, and where they repeat the clamp motion to hold the hoop at two positions between which the metal components under insert molding step within the clamped mold and the metal components standing by for the succeeding insert molding step are positioned.

According to the present invention, each of the hoop conveying means comprises, in association with each of said carriages, hoop clamping means for clamping the hoop to each of the carriages, carriage lifting means for moving each of the carriages vertically to at least three preset height positions, and carriage moving means for moving the carriages in synchronism forward and backward in hoop conveying directions between a standby position and a release position.

Each of the carriage moving means comprise one of a pair of supporting tables each fitted on one of the inlet and outlet sides of the mold for supporting one of the carriages on the inlet and outlet sides respectively in slidable fashion forward and backward in the conveying directions, drive means mounted on one of the supporting tables for sliding the associated one of the carriages forward and backward, and a coupling connector for mechanically connecting the both carriages with each other. This makes it possible to move the pair of carriages in synchronism forward and backward in the conveying directions between the standby and release positions on the pair of supporting tables, and to move the carriages vertically to said at least three preset height positions by moving the supporting tables vertically among the three preset height positions by means of the carriage lifting means.

The coupling connector provides a secure mechanical interconnection between the pair of carriages on the inlet and outlet sides of the mold so that the carriages are spaced from each other to avoid any mechanical interference with the die halves during the movement of the mold. It is preferable that the coupling connector be mounted on at least one of the side walls of the mold along the hoop conveying directions. In case that the coupling connector was mounted on only one of the side walls, it would be difficult to move the carriages accurately to the standby or release position. Therefore, it is more preferable that the coupling connector comprises a pair of connectors each arranged along one of both side walls of the mold and extending in the hoop conveying directions. The mold may be provided with, at its either one of side walls, an additional mechanical part such as, for example, a slide core which moves horizontally relative to the mold. In order to avoid mechanical interference with the additional mechanical part mounted near the side walls of the mold, it is more preferable that each of the connectors has a cranked shape.

The drive means for sliding the carriages is mounted on at least one of the supporting tables on the inlet and outlet sides. In order to transfer the hoop toward the outlet, it is preferable to mount the drive means on one supporting table arranged on the outlet side of the mold. The drive means is adapted to cause a reciprocal slide movement of the carriages. Preferably, the drive means is so small in size as to be mounted in a limited area on the supporting table. It is also preferable that the drive means be accurate on the micrometer level for accurate positioning of the carriages with relation to the mold. More preferably, the drive means comprises a linear servomotor.

Each of the supporting tables retains the associated one of the carriages in slidable fashion in the forward and backward directions. The supporting tables are moved up and down by the carriage lifting means so that the carriages which are supported on the supporting tables are moved vertically to one of the three preset height positions. Preferably, the hoop conveying means are mounted as close as possible to the side walls of the mold in the inlet and outlet sides, respectively.

Generally in an injection molding machine, the upper and lower die halves are supported by the movable and fixed die plates respectively. In the present invention, since the hoop conveying means are arranged in the vicinity of the mold, the carriages of the hoop conveying means need to be mounted on the inlet and outlet sides of the die plates respectively, and the hoop conveying means also need to have a function to move the carriages vertically in synchronism with each other. Generally, in the conventional injection molding machines, there is no place on the die plate for the carriages to be moved vertically. In a preferred embodiment of the present invention, each of the carriages is supported by the associated one of the supporting tables in slidable fashion in the conveying directions, and each of the supporting tables is moved vertically in synchronism with each other by the associated one of the carriage lifting means which is mounted under the fixed die plates (lower die plate).

Preferably, the carriage lifting means comprises a pair of lifting tables each positioned just under the associated one of the supporting tables and a plurality of lifting poles respectively connecting one of the lifting tables with the associated one of the supporting tables. Accordingly, the fixed die plate only needs to have through holes through which the lifting poles extend, and this makes it possible to mount under the fixed die plate the carriage lifting means for moving the supporting tables vertically, on which tables the carriages are supported respectively. This also reduces the mechanical influence on the fixed die plate supporting one of the die halves. The hoop conveying means such as the carriage lifting means could be mounted on the movable die plate. Needless to say, however, it is advantageous to mount the hoop conveying means on the fixed die plate in order to convey the hoop accurately.

In principle, it is possible that each of the lifting tables and the associate one of the supporting tables are connected by a single lifting pole for moving the same vertically. According to the preferable embodiment of the present invention, each of the lifting tables is connected with the associated one of the supporting tables by at least three lifting poles which are positioned at the apexes of a triangle. This stabilizes the supporting tables, so that their vertical movement is stable.

The injection molding machine used in the insert molding machine of the present invention may be either hydraulic or electric operated type as far as it can open and close its mold at high speed and enables high-speed insert molding.
It is preferable for high-speed molding to use an electric operated injection molding machine which is higher in speed of response than that of the hydraulic operated type. It is advantageous to use an electric operated injection molding machine, which has a simple mechanism for opening and closing the mold, in the present invention, in which the hoop conveying means needs to be incorporated into the molding machine, as hereinafter described in detail. In an embodiment of the present invention, a vertical injection molding machine is used. However, using a horizontal injection molding machine having a corresponding hoop transfer mechanism would bring similar advantages.

The present invention will be described below in further detail in the form of a preferred embodiment which is not intended to limit the scope of the present invention. With reference to the drawings, a description will be provided below of the best mode for embodying an insert molding machine equipped with an automatic hoop feeder and a molding process according to the invention.

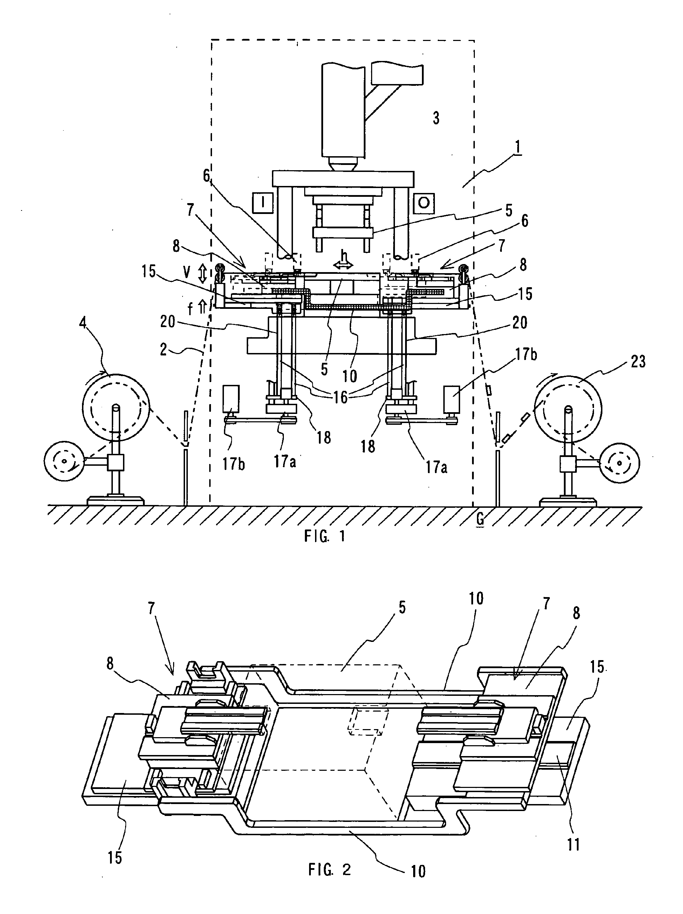

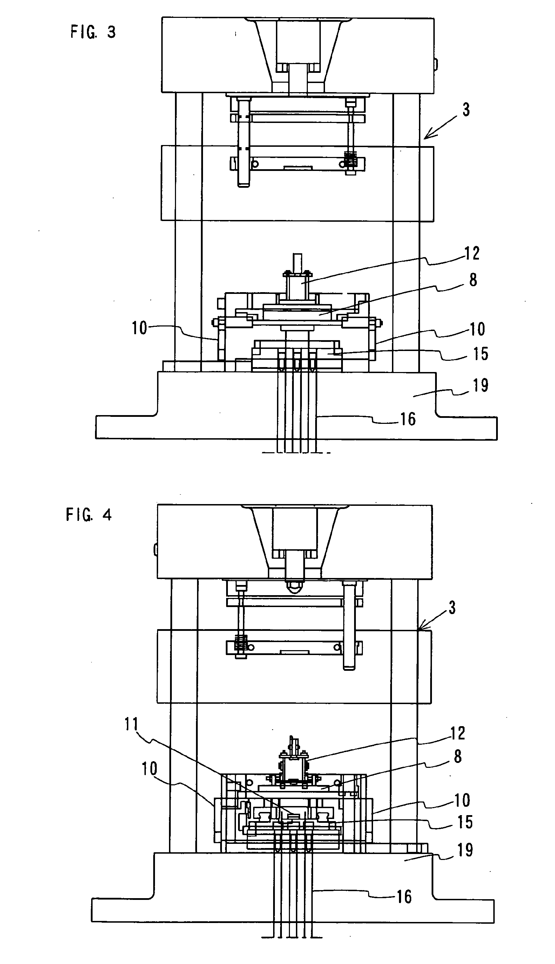

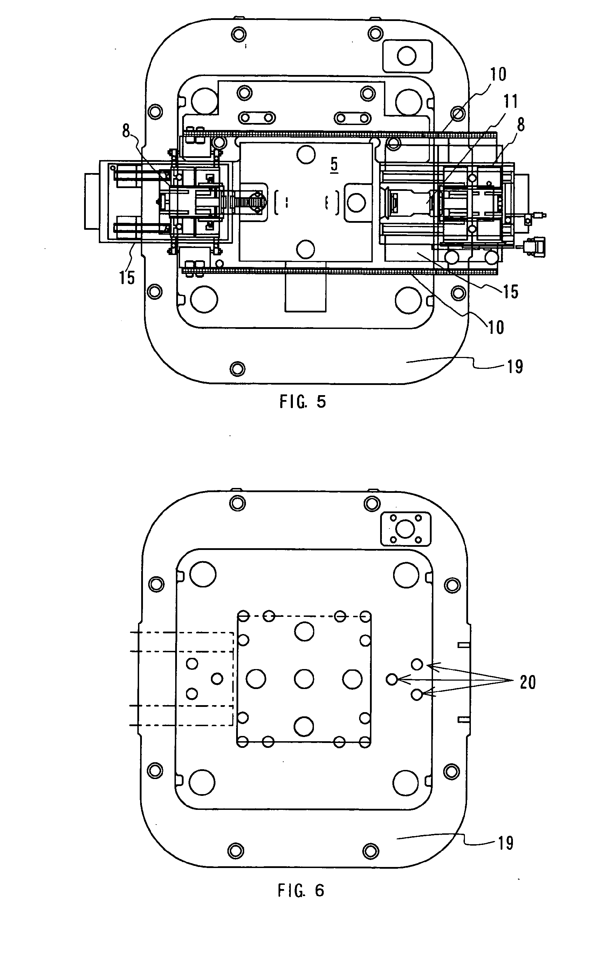

Fig. 1 shows a schematic front view of the whole configuration of an insert molding machine with an automatic hoop feeder in an embodiment according to the present invention. Fig. 2 shows a perspective view of the carriages connected by a pair of coupling connectors of hoop conveying means in the present embodiment. Fig. 3 shows a left side view of a principal portion of the molding machine in the present embodiment. Fig. 4 shows a right side view of the principal portion of the molding machine in the present embodiment. Fig. 5 shows a simplified plane view of the insert molding machine in the present embodiment.

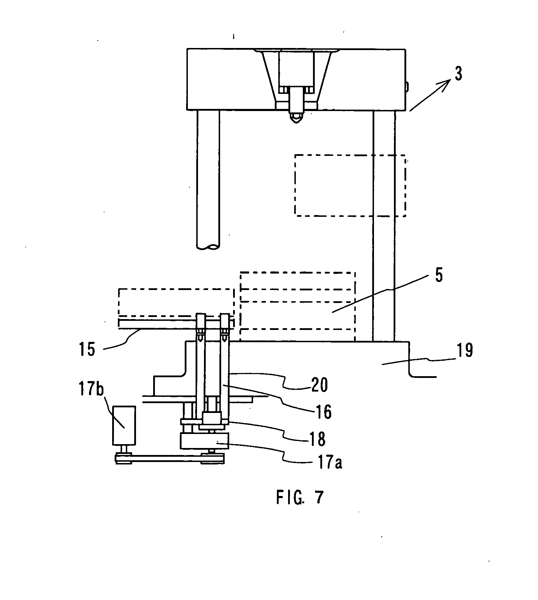

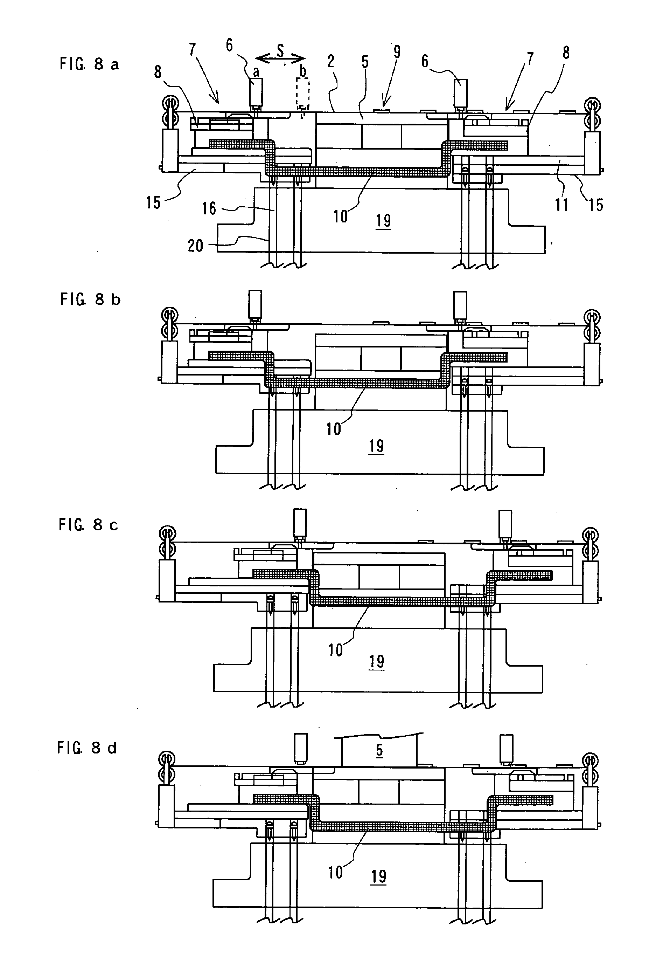

Fig. 6 shows a plane view of a stationary die plate of the molding machine. Fig. 7 shows schematically a front view of a portion including the stationary die plate shown in Fig. 6. Figs. 8a to 8d show explanatorily a series of operational steps performed by the hoop conveying means in the present embodiment.

As shown in Fig. 1, the insert molding machine 1 according to the present invention comprises an injection molding machine 3 and a pair of transfer conveyors 7 as hoop conveying means mounted on the inlet side (I) and outlet side (O) of the mold 5 of the injection molding machine, respectively. Each of the conveyors 7 comprises a supporting table 15 on which a carriage 8 is supported and adapted to be able to slide reciprocally along a horizontal hoop conveying direction (h) . The supporting table 15 on the outlet side (O) is provided with a linear servomotor 11 as a carriage drive means for reciprocal sliding the carriages 8 along the hoop conveying direction. The carriages 8 on both sides are interconnected by a coupling connecter formed by a pair of connectors 10, as shown in Fig. 2. Accordingly, while the linear servomotor 11 drives the carriage 8 on the outlet side (O) to slide forward and backward, the carriage 8 on the inlet side (I) is also driven by the connectors 10 in complete synchronism.

The connectors 10 are mounted on both side walls of the lower die halve of the mold 5, which is shown with one-dot chain lines in Fig. 2. Each of the connectors 10 takes the form of a double crank with a central recess as shown in Fig. 2, so that the connectors 10 do not interfere with the mold 5 as well as any additional mechanical parts such as slide cores mounted in the vicinity of the mold 5.

As shown in Figs. 3 and 4, three lifting poles 16 are extended vertically under each supporting table 15. The lifting poles 16 are adapted to move the associated supporting table 15 vertically. As shown in Figs. 1 and 7, the molding machine comprises a pair of servomotor 17b each of which is used as a drive means for moving the associated one of the supporting tables on the inlet and outlet sides respectively. The servomotor 17b drives a lifting lead screw device 17a, which moves a lifting table 18 vertically. The lifting table 18 supports the lower end of the respective lifting poles 16 so that when the lifting table 18 moves vertically, the supporting table 15 is driven to move vertically. The three lifting poles 16 are fixed to the supporting table 15 and extend through three holes 20 (FIG. 6) positioned at the apexes of a triangle and formed through a fixed frame 19, which is firmly mounted beneath the mold 5 of the injection molding machine 3.

As shown in Fig. 1, the insert molding machine 1 is equipped with an unwinding reel 4, on which a stock of hoop 2 in the form of a roll is wound. The hoop 2 forms a thin carrier strip on which a number of metal terminal blocks are carried at regular intervals in a raw. The hoop 2 is transferred (in direction f) from the unwinding reel 4 intermittently in synchronism with the molding cycles of the injection molding machine 3. The hoop 2 is fed into the mold cavity of the molding machine 3 and molded with molding resin injected into the cavity. In this embodiment, the molded products are molded connector terminal devices 9, each of which has a number of exposed connector contacts and metallic supporting parts molded within the insulating mold formed by the molding resin. The connector terminal devices 9 molded automatically and successively one after another through the molding cycles are also carried on the hoop and fed out sequentially together with the hoop to a winding reel 23.

According to the insert molding machine 1 of this embodiment, it is possible to improve the accuracy of the hoop transfer than that of the conventional molding machine shown in Fig. 10. The automatic hoop feeder system for transferring the hoop intermittently in the insert molding machine 1 comprises a pair of transfer conveyors 7 as hoop conveying means mounted on the inlet side (I) and outlet side (O) of the mold 5 with respect to the hoop-feeding direction (f), respectively. Each of the transfer conveyors 7 carries either one of a pair of hoop clamping mechanisms 6. Each of the clamping mechanisms 6 of the two conveyors 7 moves in synchronism with each other from a clamp position (a) (start point) to a release position (b) (end point) b, respectively.

As shown in Fig. 1, each clamping mechanism 6 is mounted on the associated carriage 8 and moves with it horizontally (in directions h) and vertically (in directions v). The pair of clamping mechanisms 6 clamps the carrier strip of the hoop 2 to the carriages 8 positioned at their start points (a). When the carriages 8 move to the end points (b), and when the mold 5 is closed, the clamping mechanisms 6 releases the carrier strip of the hoop 2 from the carriages 8, which then return to the start points (a) (Figs. 8a - 8d) .

The operation of the insert molding machine 1 will be described below in more detail. As shown in Fig. 8a, when the curing/cooling step of the injection molding machine 3 ends, the upper die half of the mold 5 opens. Subsequently, as shown in Fig. 8b, the lifting poles 16 of the lifting tables 18 operate to lift, together with the supporting tables 15 and connectors 10, the carriages 8 holding the hoop 2 by means of the clamping mechanisms 6 on both sides of the mold 5. As the result, the connector terminal devices 9 just molded on the hoop 2 are lifted to a height where the molded devices do not interfere with the upper and lower die halves of the mold 5, which are already opened. Then the carriages 8 move to the end points (b).

As shown in FIG. 8c, when the following metal terminal block moves to a preset position over the lower die half of the mold 5, the supporting tables 15 move downward so as to insert the metal terminal block in a preset position in the cavity of the mold 5. The lower die half of the mold 5 has a positioning pin (not shown) standing near the preset position in its cavity. The carrier strip of the hoop 2 has a pilot hole. The insertion of the metal terminal block in the preset position in the die cavity includes lowering the hoop 2 by means of the supporting tables 15, so that the positioning pin engages with the pilot hole. The engagement sets the exact insert position of the metal terminal block of the hoop to be inserted into the die cavity. Subsequently, as shown in Fig. 8d, the upper die half of the mold 5 moves downward, and insert molding is carried out by the injection molding machine 3. In the meantime, the clamping mechanisms 6 release the carrier strip of the hoop 2 from the carriages 8, which carriages then return to the start points (a).

As stated above, with the hoop 2 lifted to the high position by the lifting poles 16 and held there by the clamping mechanisms, the carriages 8 move for a stroke S to the respective end points (b). The hoop 2 fed for the stroke S is aligned with the positioning pin of the lower die half of the mold 5 in the preset position, with the following metal terminal block positioned in the insert position. The lifting poles 16 move downward to their lowest position, with the hoop 2 held by the clamping mechanisms 6, so that the metal terminal block of the hoop 2 is inserted exactly in the insert position in the cavity of the mold 5.

Thereafter, similar operation is repeated automatically in succession.
At each shot of the injection molding machine 3, after the hoop 2 is inserted into the cavity of the mold 5, a set of electronic connector terminal devices 9 is molded. The molded devices 9 are conveyed one after another with the carrier strip of the hoop 2 to the winding reel 23. This enables stable, successive, and automatic molding.

As understood from the foregoing description, in the insert molding machine equipped with an automatic hoop feeder according to the present invention, the lifting tables are installed, in addition to the molding ejector, within a space under the fixed frame firmly mounted beneath the lower die plate of the injection molding machine. This makes it possible to simplify the mechanical construction of the insert molding machine remarkably and enables the stable and reliable insert molding to work continuously at high speed.

As shown in Fig. 1, on the inlet side of the insert molding machine 1, the hoop 2, which forms a thin carrier strip on which a number of metal terminal blocks are carried at regular intervals in a raw, is wound in the form of a roll stock on the unwinding reel 4 and transferred (in direction f) from the reel 4 intermittently in synchronism with the molding cycles of the injection molding machine 3. In contrast, on the outlet side of the molding machine 1, the hoop 2 carries a series of molded products, that is, in this embodiment, a number of molded connector terminal devices 9, each of which has a number of exposed connector contacts and metallic supporting parts molded within the insulating mold. The molded connector terminal devices carried on the hoop 2 are fed out successively together with the hoop 2 to the winding reel 23.

The automatic hoop feeder system, which feeds the hoop 2 intermittently, comprises a pair of transfer conveyors 7 including a pair of carriages 8 each of which is arranged on either one of the inlet side (I) and outlet side (O) of the mold 5 with respect to the hoop-feeding direction (h) (Fig. 1). The transfer conveyors comprise their respective clamping mechanisms 6 which are operated in synchronism with each other at the both clamping positions (a) (start points) and opening positions (b) (end points).

The operational flow of the insert molding machine equipped with an automatic hoop feeder system according to the present invention will now be described. As the initial setting of the automatic hoop feeder, the carriages 8 are moved from the start positions (a) to the end positions (b), and the supporting tables 15 of the conveyors 7 are moved downward to their lowest positions. In the meantime, the metal terminal block carried on the hoop to be inserted is aligned with the positioning pin (not sown) of the lower die half of the mold 5 to fit in the preset position in the die cavity. This completes the initial setting.

The following mold clamping step, injection molding step, curing/cooling step, and mold opening step are similar to those known in the conventional insert molding. Specifically, the upper and lower die halves of the mold 5 are clamped with the hoop 2 held in the die cavity. The cavity of the closed mold 5 is supplied with molding resin from the nozzle of an injection cylinder, so that the injection molding step is carried out.

In the meantime, metal terminal blocks which are arrayed on the hoop 2, are positioned appropriately in the cavity of the clamped mold 5 in the mold clamping step. Then, the clamping mechanisms 6 lift the clamping platen 12 (Figs. 3 and 4) to release the carrier strip of the hoop 2 from its clamped condition, and the carriages 8, which are now free of the hoop, are moved back to the start points (a). At the start points (a), the clamping mechanisms 6 are activated again to move the clamping platen 12 in order to compressively fix on the carriages 8 the carrier strip of the hoop 2 on which the following metal terminal blocks are arrayed, and these blocks stand by until they are insert-molded.

When a suitable cooling time has passed after the injection molding, the injected resin is cured. Subsequently, the upper and lower halves of the mold 5 are opened, and the molded connector terminal devices 9 are ejected from the die cavity. In synchronism with the ejection, the supporting tables 15, which carry the carriages 8 interconnected by the coupling connectors 10 and holding the hoop 2 by the clamping mechanisms 6, are lifted. Then the hoop 2 is held at the height where the molded connector terminal devices 9 are out of contact with the mold 5.

Subsequently, together with the hoop 2 held by the clamping mechanisms 6, the carriages 8 are moved for the stroke S to their respective end points (b). The end positions (b) are predetermined, then the following metal terminal block carried on the hoop 2 for the next insert molding are fed for the stroke S and aligned with the positioning pin of the lower die half of the mold 5 now opend. Subsequently, together with the hoop 2 held by the clamping mechanisms 6, the carriages 8 are move downward to their lowest positions, so that the metal terminal block of the hoop 2 are fit exactly in the insert position in the cavity of the mold 5.

The aforementioned last step is followed by the mold clamping step as stated above. Then, a next production cycle begins, in which the process beginning with the mold clamping step and ending with the step of positioning the following metal terminal blocks in the insert position is repeated automatically. The operation of the conveyors 7 positioned adjacent to the mold 5, will be carried out in similar manner as far as unexpected variations or unintentional shifts are to be compensated.

As described hereinbefore, the process of the injection molding is performed with the hoop 2 held between the die halves of the mold 5 and the electronic connector terminal devises 9 are molded sequentially by the insert molding. During the injection molding, the hoop 2 is fixed between the die halves of the mold 5, so that it is kept from shifting relative to the mold 5 even though the clamping mechanisms 6 release the hoop 2. Accordingly, during the injection molding, the conveyors 7 are returned to their respective start points (a) together with the clamping mechanisms 6 that are free of the hoop 2. Then, the clamping platen 12 is lowered again to clamp the hoop 2 compressively on the carriages 8 for standing periods until the molding ends. Thereafter, similar operation is repeated continuously. The electronic connector terminal devices 9 molded on the hoop are transferred intermittently for the stroke S of the carriages 8 through each molding cycle and are conveyed successively to the winding reel 23.

As will be understood from the foregoing description, an insert molding machine according to the present invention is equipped with a pair of hoop conveying means, each of which is installed adjacently to one of the opposed inlet and outlet sides of the mold of the injection molding machine, and the pair of hoop conveying means include an inlet carriage and an outlet carriage respectively, which are connected by a coupling connector so that the both carriages move forward and backward in complete synchronism with each other, so that a hoop can be conveyed as it is clamped at two positions apart from each other over a sufficiently short span in between without curving and meandering the hoop . This makes it possible to attain stable and high conveying accuracy, without applying a pull or other excessive tension to the hoop clamped to the carriages. Consequently, it is possible to feed the hoop to the mold and discharge the hoop therefrom at high speed, thereby enabling high-speed molding.

## Claims

1. An insert molding machine comprising an injection molding machine, an automatic hoop feeder for conveying a hoop intermittently through a mold mounted on the injection molding machine, said hoop being formed of a thin carrier strip on which a plurality of metal components of a molded product to be manufactured are carried at regular intervals in a row, each of said metal components being inserted into a cavity of said mold and integrally molded with a molding resin injected in said cavity to form the molded product, and a pair of hoop conveying means each of which is installed adjacently to one of the opposed inlet and outlet sides of said mold respectively,
wherein each of said hoop conveying means includes one of a pair of carriages each positioned on one of the opposed inlet and outlet sides of said mold respectively, hoop clamping means mounted on each of the carriages, carriage lifting means for moving each of the carriages vertically to a plurality of preset height positions in synchronism with each other, and carriage moving means for moving the carriages in synchronism forward and backward in hoop conveying directions, and
wherein each of said carriage moving means includes one of a pair of supporting tables each mounted on one of the opposed inlet and outlet sides of said mold for supporting one of the carriages on the inlet and outlet sides respectively in slidable fashion forward and backward in the conveying directions, drive means mounted on one of the supporting tables for sliding the associated one of the carriages forward and backward, and a coupling connector for mechanically connecting the carriages with each other.

2. The insert molding machine according to claim 1, wherein said coupling connector comprises a pair of connectors each arranged along one of both side walls of the mold and extending in the hoop conveying directions.

3. The insert molding machine according to claim 1, wherein said drive means comprises a linear servomotor.

4. The insert molding machine according to claim 1, wherein said carriage lifting means comprises:
a pair of lifting tables each positioned just under one of the supporting tables respectively; and
a plurality of lifting poles respectively connecting one of the lifting tables with the associated one of the supporting tables.

5. The insert molding machine according to claim 5, wherein each of the lifting tables is connected with the associated one of the supporting tables by at least three lifting poles.

6. The insert molding machine according to claim 5, wherein the lifting poles extend through holes formed through a die plate which supports a lower die half of the mold.
